# EUROPEAN PATENT SPECIFICATION

(11) **EP 1 652 954 B1**
(45) Date of publication and mention of the grant of the patent: **22.04.2009**
(21) Application number: 05256731.0
(22) Date of filing: 31.10.2005
(51) Int. Cl.: C23C 4/12, H05H 1/42, F01D 5/28, F01D 5/00, B23P 15/02, B23P 15/04

(54) **Method and apparatus for microplasma spray coating a portion of a compressor blade in a gas turbine engine**
Verfahren und Vorrichtung zum Mikroplasmaspritzbeschichten eines Teils einer Verdichterschaufel eines Düsentriebwerkes
Procédé et appareil pour le revêtement par microplasma d'une portion d'une aube de compresseur de turbine .

(30) Priority: 29.10.2004 US 976561; 26.07.2005 US 190136; 19.10.2005 US 253868
(43) Date of publication of application: 03.05.2006
(73) Proprietor: United Technologies Corporation, Hartford, CT 06101 (US)
(72) Inventor: Zajchowski, Paul H., Enfield, CT 06082 (US); Shubert, Gary, East Hampton, CT 06424 (US); Blankenship, Donn R., Southbury, CT 06488 (US)
(74) Representative: Leckey, David Herbert

(56) References cited:
- EP-A- 0 808 913
- EP-A- 1 277 854
- US-A- 4 256 779
- US-A- 6 042 880
- US-A1- 2003 033 702
- US-A1- 2004 084 423

## Description

The present disclosure generally relates to spray coating methods and apparatus and, more particularly, relates to a method for microplasma spray coating a blade root of a compressor blade in a gas turbine engine.

Plasma coating methods and apparatus are known. For example, one patent relates to a method and apparatus for plasma flame spray coating material onto a substrate. The patent discloses a method and apparatus for plasma flame spray coating material onto a substrate by means of passing a plasma forming gas through a nozzle electrode, and passing an arc forming current between the nozzle electrode and a rear electrode to form a plasma effluent. The method includes introducing coating material into the plasma effluent, passing the plasma effluent axially through a wall shroud extending from the exit of said nozzle electrode, and forming a flame shroud for the plasma effluent. The coating is thereby applied to the substrate.

One area where such technology is particularly advantageous is in connection with coating various aircraft components, particularly gas turbine engines and their components. US 2003/0033702, for example, discloses a method for repairing the honeycomb backing material in gas turbine/engine seels. In another example, the blade roots of compressor blades can be coated with material to meet dimensional tolerance requirements for sealing the compressor blade with the compressor wheel and the like. Metallic coatings consisting of copper-nickel, aluminum-copper, and other similar composition materials have been applied in this regard using various conventional plasma spray coating processes. Typically, the coating process requires the compressor blade to be masked in areas where the material transfer is not required and/or not desired. Furthermore, the compressor blade is typically coated in a dedicated facility such as an aircraft engine manufacturing plant or repair shop. Prior art methods and apparatus required masking the compressor blade and applying the coating in dedicated facilities because the coating equipment was large and not portable and the spray pattern was too wide to accurately control the coating process. The use of a microplasma spray in the repair of coatings such things as aircraft equipment is disclosed in Microplasma Spraying-Yushchenko et al, Proc 15th international Thermal Spray Conference, 25-29 May, 1998, P 1461-1467. It would be desirable to improve the accuracy of spray coating devices so that masking and the like would not be required, as well as permitting hand spray coating repairs in the field of operation.

In accordance with the present invention, there is provided, a method for repairing a gas turbine compressor blade using microplasma spray coating as claimed in claim 1.

Other applications of the present invention will become apparent to those skilled in the art when the following description of a preferred embodiment of the invention is read in conjunction with the accompanying drawings.
Fig. 1 is a schematic representing a microplasma spray gun and a workpiece;
Fig. 2 is an exploded, perspective view of an examplary microplasma spray apparatus constructed in accordance with the teachings of the disclosure;
Fig. 3 is a perspective view of the microplasma spray apparatus of Fig. 1, applying a coating to a workpiece; and
Fig. 4 is a flowchart describing the process for coating the microplasma spray coating a workpiece without masking.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the scope of the disclosure as defined by the appended claims.

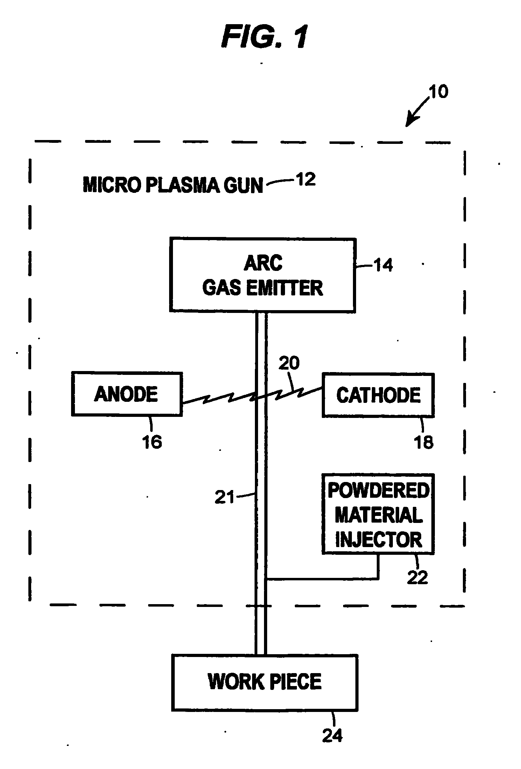

Referring now to Fig. 1, a microplasma spray apparatus 10 schematically represented by the dashed box outline is depicted. In generalized terms, the microplasma spray apparatus includes a microplasma gun 12 having an arc gas emitter 14, an anode 16, and a cathode 18. An electric arc 20 is generated between the anode 16 and cathode 18. A plasma stream 21 is formed when arc gas is injected from the arc gas emitter 14 through the arc 20. A powdered material injector 22 dispenses powdered material into the plasma stream which transports the powdered material to the workpiece 24. As a result, the powdered material forms a coating with a thickness of approximately 0.0015 to 0.006 inches (0.076 to 0.152 mm) in a desired location on the workpiece 24.

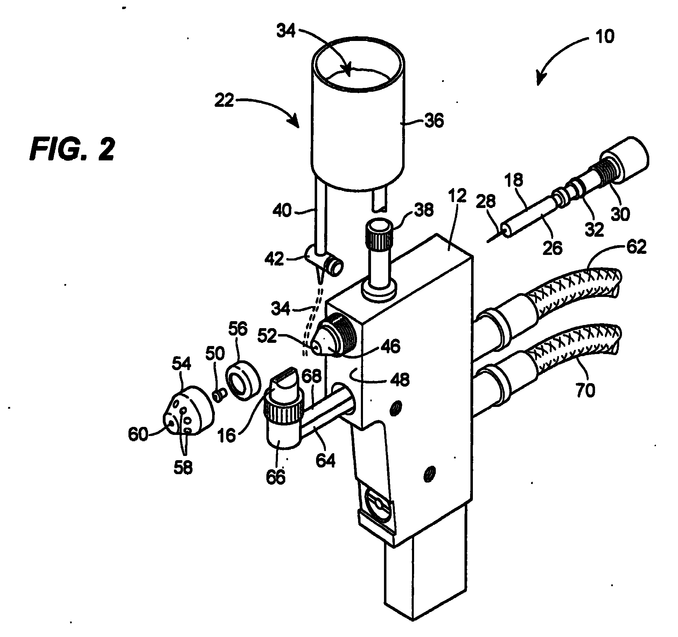

While a number of different embodiments and structural variations can be constructed to practice such an invention, the following describes one currently known embodiment. Referring now to Fig. 2, an exploded view of such a microplasma spray apparatus is again referred to by reference numeral 10. As will be described in detail below, the microplasma spray apparatus 10 is operable for coating at least a portion of a compressor blade 72 in a gas turbine engine (not shown). However, it is to be understood that the teachings of disclosure can be used to coat a myriad of other surfaces, including those on aircraft, land-based vehicles, weapons, sea-faring vessels and the like, although such methods do not fall within the scope of the claims.

In the depicted embodiment, the microplasma spray apparatus 10 includes the aforementioned microplasma gun 12 having an anode 16 and a cathode 18. The cathode 18 is further depicted to include an insulated body 26 with an electrode 28 extending therefrom. The cathode 18 can also include threads 30 for threadingly engaging the microplasma gun 12. The cathode 18 can also include an O-ring seal 32 to seal the leak path that is created at the interface between the cathode 18 and the microplasma gun 12.

In operation, an electric arc 20 (Fig. 1) is generated between the anode 16 and cathode 18 of the microplasma gun 12. Arc gas such as, but not limited to argon, is emitted into the electric arc formed between the anode 16 and the cathode 18. It should be understood that in practice the arc gas can be emitted prior to generating the electric arc. The electric arc ionizes the gas to create the plasma gas stream 21. The ionization process removes electrons from the arc gas, causing the arc gas to become temporarily unstable. The arc gas heats up to approximately 20,000°F to 30,000°F (11097°C to 16426°C) as it re-stabilizes. The plasma stream cools rapidly after passing through the electric arc.

A powdered material injector 22 injects powdered material 34 into the plasma gas stream 21. The powdered material 34 is heated and super plasticized in the plasma stream and is deposited on the compressor blade (not shown) where it cools and resolidifies to form the coating. The powdered material injector 22 includes a powder hopper 36 for holding the powdered material 34. The hopper 36 is attached to the microplasma gun 12 via a connector 3 8 formed on the microplasma gun 12. The powder hopper 36 holds powdered material to be sprayed onto the compressor blade 72. The powdered material 34 is channeled through a discharge chute 40 and controlled by a valve 42 positioned in the discharge chute 40. The valve 42 can be mechanical or electromechanical as is known to those skilled in the art. Powder may also be injected into the plasma stream via a powder gas line from a standard powder feeder (not shown).

A nozzle shroud 46 positioned on a forward wall 48 of the microplasma gun 12 holds a nozzle insert 50 and permits the electrode 28 to extend through a center aperture 52 formed in the nozzle shroud 46. The nozzle insert 50 can be threadingly attached to an end of the nozzle shroud 46. A shield gas cap 54 is positioned adjacent the nozzle shroud 46. An insulator 56 is positioned between the shield gas cap 54 and the nozzle shroud 46 to electrically isolate the shield gas cap 54 from the nozzle shroud 46. The shield gas cap 54 can be pressed to fit onto the nozzle shroud 46 and over the insulator 56. The shield gas cap 54 includes a plurality of through apertures 58 for permitting shield gas to flow therethrough and shield the arc gas from ambient atmosphere. A center aperture 60 formed in the shield gas cap 54 permits high velocity arc gas to pass through and into the electric arc.

Cooling fluid, such as water or the like, is utilized to cool the microplasma gun 12. The cooling fluid is delivered to the microplasma gun 12 via a cooling fluid hose 62. The cooling fluid traverses through internal passages (not shown) in the microplasma gun 12 and flows through an inlet passage 64, into an anode holder 66 and back through an outlet passage 68. The cooling fluid reduces the temperature of the anode 16 during operation of the microplasma gun 12. The cooling flow rate may be approximately 0.1 to 1.0 gallons per minute (0.38 to 3.8 liters per minute). A second conduit 70 is connected to the microplasma gun 12. The second conduit may be operable for providing electrical power, arc gas, and shield gas to the microplasma gun 12.

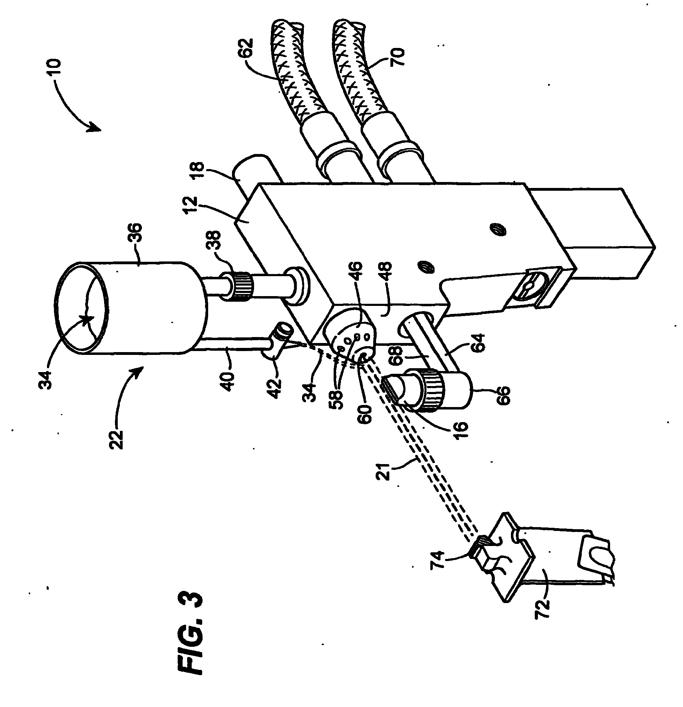

Referring now to Fig. 3, it is shown that a localized area of the compressor blade 72 such as a blade root 74 can be spray coated with powdered material 34. The plasma gas stream 21 is directed toward the portion of the compressor blade 72 to be coated. The microplasma gun 12 is operated at a relatively low power range of between approximately 0.5 Kilowatts and 4 Kilowatts. The low power output of the microplasma gun 12 significantly reduces the heat flow into the compressor blade 72 over that of conventional coating methods. The maximum surface temperature of the compressor blade 72 caused by the coating process is approximately 200°F (93°C) depending on the size of the blade. The microplasma gun 12 is operable for applying powdered material 34 to a thin wall area of the compressor blade 72 without distorting the compressor blade 72 because the low power output limits the localized stress caused by high thermal gradients.

The microplasma gun 12 can apply coating material in narrow strips of about 0.5 mm to about 5 mm in width. This permits accurate surface coating even with a hand held device. The narrow strips of coating substantially eliminate the need for masking or otherwise covering the compressor blade 72 in areas where the coating is unwanted. The narrow spray pattern is controlled by the nozzle opening size. The hand held version of the microplasma gun 12 is so accurate that coating can be sprayed on components while they remain installed in an engine or the like.

The arc gas flow rate of the microplasma apparatus 10 may be between approximately 0.5 and 3 liters per minute. As stated above, the arc gas and shield gas are typically argon, but any suitable inert gas can be utilized as is known to those skilled in the art. The shield gas flow rate ranges between approximately 2 and 8 liters per minute for a typical application. The coating material for the compressor blade 72 can be a copper-nickel alloy, a copper-aluminum alloy, or other alloys suitable for compressor blades having operating temperatures that are typically below 1000°F (534°C), as is known to those skilled in the art.

The powder hopper 36 holds the powdered material 34 prior to being injected into the plasma gas stream 21 by the powder injector 22. The powdered material 34 can be injected into the plasma gas stream 21 either through gravity feed or through a pressurized system (not shown). The shut-off control valve 42 controls the powdered material 34 feed rate into the plasma gas stream 21. Powdered material 34 is transferred to the compressor blade 72 from between approximately 1 to 30 grams per minute. The microplasma gun 12 can typically apply the coating from distances ranging from approximately 1.5 inches to 8 inches (38 to 203 mm), to the compressor blade 72, but can vary depending on the coating application requirements. The microplasma spray gun 12 can be oriented between a positive 45° angle and a negative 45° angle relative to a normal axis of the compressor blade and still provide adequate material coating with a gravity feed system. A pressure feed system provides unlimited angles or orientation for the microplasma gun 12. The microplasma spray gun 12 generates a relatively low noise level that ranges from between 40 and 70 decibels due to the low power output, thereby making the apparatus 10 suitable for hand held application. Current U.S. government regulations require hearing protection when environmental noise reaches 85 decibels. The microplasma spray apparatus 10 is hand held.

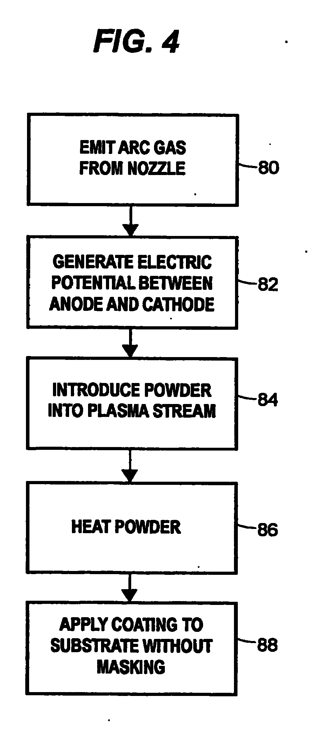

Referring now to Fig. 4, a block diagram generally describing the operation of the microplasma spray apparatus 10 and the plasma spray coating process is illustrated. Initially, at block 80, arc gas is emitted from the nozzle insert 50. An electric potential is generated between the anode 16 and the cathode 18 of the plasma spray gun 12 and is directed through the arc gas, as described in block 82. Arc gas is directed through the electric potential to create the plasma stream 21. At block 84, powdered material 34 is injected into the plasma stream 21. At block 86, the plasma stream heats the powdered material 34 to a "super plasticized" condition such that the powdered material 34 is malleable when it is applied to a workpiece. At block 88, the powdered material 34 is applied to an unmasked substrate. The powdered material 34 then cools and solidifies as a hard coating on the substrate.

## Claims

1. A method of repairing a turbine compressor blade using a microplasma spray coating apparatus whilst it remains installed in a gas turbine engine, comprising:
using a hand held and operated microplasma spray gun (12), which comprises an anode (16) and a cathode (18);
injecting inert arc gas from a nozzle;
generating an electric arc between the anode (16) and the cathode (18) through the arc gas;
ionizing the arc gas with the electric are to form a plasma gas stream (21);
injecting powdered material (34) into the plasma gas stream; and
spray coating a localized area (74) of the compressor blade (72) with the powdered material without masking the compressor blade (72) and without utilizing a dedicated spray coating facility.

2. The method of claim 1, further including operating the microplasma gun (12) at a relatively low power range between approximately 0.5 Kilowatts and 4 Kilowatts.

3. The method of claim 1 or 2, wherein a maximum surface temperature of the compressor blade (72) caused by the coating process is approximately 200°F (93°C).

4. The method of any preceding claim, further including applying the coating material (34) to the compressor blade (72) in narrow widths of about 0.5 mm to about 5 mm.

5. The method of any preceding claim, further including flowing the arc gas at a rate between approximately 0.5 and 3 liters per minute.

6. The method of any preceding claim, wherein the arc gas is argon.

7. The method of any preceding claim, further including flowing a shielding gas at a rate between approximately 2 and 8 liters per minute.

8. The method of claim 7, wherein the shielding gas is insert.

9. The method of claim 8, wherein the shielding gas is argon.

10. The method of any preceding claim, wherein the coating material (34) is a copper and nickel alloy.

11. The method of any of claims 1 to 9, wherein the coating material (34) includes an aluminium-copper alloy.

12. The method of any preceding claim, further including feeding the powder material (34) at a rate approximately between 1 and 30 grams per minute.

13. The method of any preceding claim, further including cooling the microplasma gun with a water cooling system.

14. The method of any preceding claim, further including applying the coating to the compressor blade from a distance of between approximately 1,5 to 8 inches (38 to 203 mm).

15. The method of any preceding claim, further including applying the coating to the compressor blade (72) with the microplasma gun (12) angle positioned approximately between a positive 45 degree angle and a negative 45 degree angle relative to a normal axis of the part.

16. The method of any preceding claim, further including generating a noise level of between approximately 40 and 70 decibels during operation.

## Patentansprüche

1. Verfahren des Reparierens einer Turbinenkompressorschaufel unter Benutzung einer Mikroplasma-Sprühbeschichtungsvorrichtung, während sie in der Gasturbinenmaschine installiert bleibt, aufweisend:
Benutzen einer handgehaltenen und -betriebenen Mikroplasma-Sprühkanone (12), die eine Anode (16) und eine Kathode (18) hat;
Einsprühen von inertem Lichtbogengas aus einer Düse;
Erzeugen eines elektrischen Lichtbogens durch das Lichtbogengas zwischen der Anode (16) und der Kathode (18);
Ionisieren des Lichtbogengases mit dem elektrischen Lichtbogen, um einen Plasmagasstrom (21) auszubilden;
Hinsprühen von Pulvermaterial (34) in den Plasmagasstrom; und
Sprühbeschichten eines lokalisierten Bereichs (74) der Kompressorschaufel (72) mit dem Pulvermaterial, ohne die Kompressorschaufel (72) zu maskieren und ohne eine dedizierte Sprühbeschichtungsanlage zu benutzen.

2. Verfahren nach Anspruch 1, zusätzlich aufweisend, Betreiben der Mikroplasmakanone (12) in einem relativ niedrigen Energiebereich zwischen ungefähr 0,5 kW und 4 kW.

3. Verfahren nach Anspruch 1 oder 2, wobei die maximale von dem Beschichtungsprozess verursachte Oberflächentemperatur der Turbinenschaufel (72) ungefähr 200 °F (93 °C) ist.

4. Verfahren nach einem der vorangehenden Ansprüche, zusätzlich einschließend Aufbringen des Beschichtungsmaterials (34) auf die Kompresssorschaufel (72) in schmalen Breiten von ungefähr 0,5 mm bis ungefähr 5 mm.

5. Verfahren nach einem der vorangehenden Ansprüche, zusätzlich einschließend, Einströmen des Lichtbogengases mit einer Rate zwischen ungefähr 0,5 und 3 Litern pro Minute.

6. Verfahren nach einem der vorangehenden Ansprüche, wobei das Lichtbogengas Argon ist.

7. Verfahren nach einem der vorangehenden Ansprüche, zusätzlich einschließend Einströmen eines Schutzgases mit einer Rate zwischen ungefähr 2 und 8 Litern pro Minute.

8. Verfahren nach Anspruch 7, wobei das Schutzgas inert ist.

9. Verfahren nach Anspruch 8, wobei das Schutzgas Argon ist.

10. Verfahren nach einem der vorangehenden Ansprüche, wobei das Beschichtungsmaterial (34) eine Kupfer- und Nickellegierung ist.

11. Verfahren nach einem der Ansprüche 1 bis 9, wobei das Beschichtungsmaterial (34) eine Aluminium-Kupfer-Legierung einschließt.

12. Verfahren nach einem der vorangehenden Ansprüche, zusätzlich einschließend Einspeisen des Pulvermaterials (34) mit einer Rate von ungefähr zwischen 1 und 30 Gramm pro Minute.

13. Verfahren nach einem der vorangehenden Ansprüche, zusätzlich einschließend Kühlen der Mikroplasmakanone mit einem Wasserkühlsystem.

14. Verfahren nach einem der vorangehenden Ansprüche, zusätzlich einschließend Aufbringen der Beschichtung auf die Kompressorschaufel aus einem Abstand von zwischen ungefähr 1,5 und 8 Zoll (38 bis 203 mm).

15. Verfahren nach einem der vorangehenden Ansprüche, zusätzlich einschließend Aufbringen der Beschichtung auf die Kompressorschaufel (72), wobei die Mikroplasmakanone (12) in einem Winkel zwischen ungefähr plus 45 Winkelgrad und minus 45 Winkelgrad in Bezug auf eine Normalachse des Elements angeordnet ist.

16. Verfahren nach einem der vorangehenden Ansprüche, zusätzlich aufweisend Erzeugen eines Geräuschniveaus während des Betriebs von zwischen ungefähr 40 und 70 dB.

## Revendications

1. Procède de réparation d'une aube de compresseur de turbine au moyen d'un appareil de revêtement par pulvérisation de microplasma tout en la maintenant montée dans un turbomoteur, le procédé comprenant les étapes consistant à :
utiliser un pistolet de pulvérisation de microplasma (12) tenu et actionné à la main, comprenant une anode (16) et une cathode (18) ;
injecter un arc gazeux inerte d'une buse;
générer un arc électrique entre l'anode (16) et la cathode (18) à travers l'arc gazeux ;
ioniser l'arc gazeux avec l'arc électrique pour former un flux de gaz plasma (21) ;
injecter une matière pulvérulente (34) dans le flux de gaz plasma; et
revêtir par pulvérisation de la matière pulvérulente une région localisée (74) de l'aube (72) de compresseur sans masquer l'aube (72) de compresseur et sans recourir à une installation de revêtement par pulvérisation spécialisée.

2. Procède selon la revendication 1, comportant en outre l'étape consistant à faire fonctionner le pistolet de pulvérisation de microplasma (12) sur une plage de puissances relativement faibles sensiblement comprises entre 0,5 kilowatt et 4 kilowatts.

3. Procédé selon la revendication 1 ou 2, une température de surface maximale de l'aube (72) de compresseur due au processus de revêtement étant sensiblement de 93°C (200°F).

4. Procédé selon l'une quelconque des revendications précédentes, comportant en outre l'étape consistant appliquer la matière de revêtement (34) sur l'aube (72) de compresseur en bandes de faibles largeurs comprises entre environ 0,5 mm et environ 5 mm.

5. Procédé selon l'une quelconque des revendications précédentes, comportant en outre l'étape consistant à faire s'écouler l'arc gazeux à un débit sensiblement compris entre 0,5 et 3 litres par minute.

6. Procédé selon l'une quelconque des revendications précédentes, l'arc gazeux étant constitué d'argon.

7. Procédé selon l'une quelconque des revendications précédentes, comportant en outre l'étape consistant à faire s'écouler un gaz de protection à un débit sensiblement compris environ 2 et 8 litres par minute.

8. Procédé selon la revendication 7, le gaz de protection étant inerte.

9. Procédé selon la revendication 8, le gaz de protection étant l'argon.

10. Procédé selon l'une quelconque des revendications précédentes, la matière de revêtement (34) étant un alliage de cuivre et de nickel.

11. Procédé selon l'une quelconque des revendications 1 à 9, la matière de revêtement (34) comportant un alliage aluminium-cuivre.

12. Procédé selon l'une quelconque des revendications précédentes, comportant en outre l'étape consistant à délivrer la matière pulvérulente (34) à un débit sensiblement compris entre 1 et 30 grammes par minute.

13. Procédé selon l'une quelconque des revendications précédentes, comportant en outre l'étape consistant à refroidir le pistolet de pulvérisation de microplasma par un système de refroidissement à l'eau.

14. Procédé selon l'une quelconque des revendications précédentes, comportant en outre l'étape consistant à appliquer le revêtement sur l'aube de compresseur une distance sensiblement comprise entre 38 et 203 mm (1,5 et 8 pouces).

15. Procédé selon l'une quelconque des revendications précédentes, comportant en outre l'étape consistant à appliquer le revêtement sur l'aube (72) de compresseur en maintenant le pistolet de pulvérisation de microplasma (12) à un angle sensiblement compris entre 45 degrés positifs et 45 degrés négatifs par rapport à un axe normal de la pièce.

16. Procédé selon l'une quelconque des revendications précédentes, comportant en outre l'étape consistant à générer un niveau de bruit sensiblement compris entre 40 et 70 décibels en cours de fonctionnement.
